Europäisches Patentamt

European Patent Office

Office européen des brevets

(11) Veröffentlichungsnummer: **0 212 555 B1**

(12) **EUROPÄISCHE PATENTSCHRIFT**

(45) Veröffentlichungstag der Patentschrift: **13.11.91**

(21) Anmeldenummer: **86111157.3**

(22) Anmeldetag: **12.08.86**

(51) Int. Cl.5: **C08J 3/20**, C08L 25/06, C08K 5/02

(54) Verfahren zur Herstellung von flammfest ausgerüstetem Polystyrol.

(30) Priorität: **22.08.85 DE 3529982**

(43) Veröffentlichungstag der Anmeldung:
**04.03.87 Patentblatt 87/10**

(45) Bekanntmachung des Hinweises auf die
Patenterteilung:
**13.11.91 Patentblatt 91/46**

(84) Benannte Vertragsstaaten:
**BE DE FR GB IT NL**

(56) Entgegenhaltungen:
**EP-A- 0 149 815**
**FR-A- 2 359 875**

(73) Patentinhaber: **BASF Aktiengesellschaft**
**Carl-Bosch-Strasse 38**
**W-6700 Ludwigshafen(DE)**

(72) Erfinder: **Goettsch, Manfred, Dr.**
**Pruemerstrasse 9**
**W-6704 Mutterstadt(DE)**
Erfinder: **Kindler, Hubert, Dr.**
**Westring 19**
**W-6700 Ludwigshafen(DE)**
Erfinder: **Moedersheim, Norbert**
**Taunusstrasse 3**
**W-6710 Frankenthal(DE)**
Erfinder: **Rudolph Guenther**
**Grossniedesheimer Strasse 14**
**W-6711 Beindersheim(DE)**

## Beschreibung

Die Erfindung betrifft ein Verfahren zur Herstellung von flammfest ausgerüstetem Polystyrol, das
a) halogenierte Kohlenwasserstoffe als Flammschutzmittel enthält
und
das zusätzlich aufweist mindestens ein weiteres Mittel aus der Gruppe der
b) Synergisten für das Flammschutzmittel,
c) Stabilisatoren,
d) Antioxydantien
und
e) Zusatzstoffe
durch Vermischen von Polystyrol mit mindestens einem der Mittel a) bis e) in mehreren Stufen.

Zum Stand der Technik nennen wir:
(1) DE-AS 23 00 114
(2) DE-AS 23 12 804
(3) DE-PS 12 18 149
(4) DE-OS 27 18 250
(5) DE-OS 27 18 251
(6) EP-PS 92 776
(7) US-PS 33 01 813
(8) US-PS 41 50 066

In (1) bis (8) sind flammfest ausgerüstete Polystyrolharze und Verfahren zu deren Herstellung beschrieben (vgl. insbesondere (2), Spalte 4, Zeilen 5 bis 20 sowie die Beispiele und (5) Patentanspruch).

Selbstverlöschende Formmassen auf der Basis von Styrolpolymerisaten enthalten neben dem Polymeren eine Reihe von Zusatzstoffen, nämlich Flammschutzmittel und ein oder zumeist mehrere Stabilisatoren, gegebenenfalls Synergisten und andere Hilfsmittel.

Zu ihrer Herstellung können die Zusatzstoffe bereits bei der Herstellung des Styrolpolymeren dem Monomeren zugesetzt werden. Sie können auch nachträglich dem Styrolpolymerisat zugegeben werden, indem man sie beispielsweise in Pulverform mit Polystyrolgranulat vermischt. Eine bevorzugte technische Herstellmethode für selbstverlöschende Formmassen besteht darin, daß man die Zusatzstoffe in das Styrolpolymerisat homogen einarbeitet, indem man das Polymere auf Extrudern oder Knetern aufschmilzt und hierbei die Zusatzstoffe in die Schmelze einmischt. Diese Schmelze wird dann erneut granuliert [vgl. auch (1), (2) und (5)].

Es ist bekannt, daß selbstverlöschende Formmassen auf der Basis von Styrolpolymerisaten dazu neigen, sich bei höherer Temperatur zu zersetzen und zu verfärben. Es sind auch Formmassen bekannt, die durch Zusatz geeigneter Stabilisatorgemische bei den üblichen Verarbeitungstemperaturen keine Verfärbung zeigen. Auch bei diesen stabilisierten Formmassen muß man allerdings sorgfältig darauf achten, daß bei ihrer Herstellung und Verarbeitung die zulässigen Temperaturen nicht überschritten werden.

Ein Nachteil der oben erwähnten bevorzugten Herstellungsmethode selbstverlöschender Formmassen besteht darin, daß man bei diesem Verfahren das Auftreten hoher Temperaturen, sei es auch nur kurzzeitig oder lokal, peinlichst vermeiden muß. Selbst bei stabilisierten Produkten, die ein einstündiges Lagern des Granulates bei 240 °C ohne Verfärbung aushalten, ist es erforderlich, das Gemisch auf dem Extruder bei Temperaturen von nur 170 bis 190 °C aufzuschmelzen und zu homogenisieren, vgl. (1). Diese niedere Massetemperatur ist dadurch bedingt, daß in Extrudern bekanntermaßen durch die Einwirkung der hohen Scherfelder örtlich höhere Temperaturen als die durchschnittliche Massetemperatur entstehen. Ein weiterer Nachteil ist darin zu sehen, daß man hierfür eine zusätzliche Produktionsstufe mit teueren und energie- und wartungsaufwendigen Extrudern oder Knetern benötigt.

Die für das in (1), (2) oder (5) beschriebene Verfahren benötigten Styrolpolymerisate werden meist in kontinuierlichen Prozessen hergestellt, bei denen das Produkt in Form einer heißen Schmelze anfällt. Diese Schmelze wird durch Düsen ausgetragen, abgekühlt und granuliert. Häufig sind den Austragsdüsen Extruder vorgeschaltet, in denen der Schmelze Hilfsstoffe wie Mineralöl, Farbstoffe usw. zugesetzt werden.

Es ist das Ziel der vorliegenden Erfindung, bei der Herstellung von selbstverlöschenden Formmassen das Wiederaufschmelzen des Styrolpolymerisats und das nochmalige Verstrangen und Granulieren zu vermeiden. Hierdurch kann ein erheblicher Aufwand an Investitionen, Bedienungspersonal, Energie und Wartungsarbeiten eingespart werden.

Dieses Ziel kann dadurch erreicht werden, daß man die Zusatzstoffe in dem Austragsextruder der Polymerisationsanlage mit der aus der Polymerisation kommenden Polymerschmelze vermischt. Wegen der hohen Temperaturen der Schmelze und der örtlich auftretenden Übertemperaturen im Extruder war aber zu erwarten, daß hierbei erhebliche Zersetzungen und Verfärbungen des Produktes auftreten. Diese Befürchtung wurde durch Versuche bestätigt.

Die Erfindung betrifft daher ein Verfahren zur Herstellung von flammfest ausgerüstetem Polystyrol, das halogenierte Kohlenwasserstoffe (a) als Flammschutzmittel und Stabilisatoren (b) enthält und zusätzlich mindestens ein weiteres Mittel aufweist aus der Gruppe der Synergisten (c) für das Flammschutzmittel, Antioxidantien (d) und Zusatzstoffe (e), durch Vermischen von Polystyrol mit jeweils einem der Mittel a) bis e) in mehreren Stufen.

Erfindungsgemäß wird zunächst in einer ersten Stufe in einer Mischvorrichtung das Flammschutzmittel a) und die gesamte Menge oder Teile der Stabilisatoren b) bei Temperaturen bis zu 100°C vorvermischt; dieses Vorgemisch wird danach in einer zweiten Stufe in einem kontinuierlich betriebenen Ein- oder Zweiwellenextruder oder Kneter üblicher Bauart so mit den anderen Mitteln vermischt, daß - in Förderrichtung des Extruders gesehen - zunächst das Vorgemisch und gegebenenfalls andere Mittel kontinuierlich zugeführt werden und daß danach in den weiteren Mischzonen in diesen Produktstrom unmittelbar eine weitgehend von Monomeren und Lösungsmitteln befreite Schmelze eines Poylstyrolharzes, die eine Tempertur von 200 bis 250°C aufweist, sowie gegebenenfalls weitere Mittel eingetragen werden; das flammfest ausgerüstete Polystyrol trägt man in an sich bekannter Weise aus dem Extruder aus und gewinnt das Granulat.

Die Erfindung hat somit zum Ziel, daß man Verfärbungen und Zersetzungen beim Vermischen von heißer Polystyrolschmelze mit Flammschutzmitteln dadurch vermeidet, daß man Flammschutzmittel und Stabilisatoren bei Temperaturen bis zu 100°C, vorzugsweise bei Raumtemperatur, vorvermischt und dieses Gemisch mit der Polystyrolschmelze, wie sie aus einer Polymerisationsanlage kommt, auf einem Extruder oder Kneter vermischt und dieses Gemisch in an sich bekannter Weise durch eine Düsenplatte austrägt und granuliert.

Nachstehend werden das erfindungsgemäße Verfahren und die zu seiner Durchführung erforderlichen Mittel näher erläutert:

Die Herstellung von Styrolharzen ist bekannt, ebenso die Aufarbeitung des Produktes nach der Polymerisation.

Unter Polystyrol im Sinne des erfindungsgemäßen Verfahrens sollen auch die schlagfesten Polystyrole verstanden werden, in denen die Polymerisation von Styrol in Gegenwart von 2 bis 30 Gew.-% eines Dienkautschuks oder von durch anionische Polymerisation erzeugten Blockkautschuken vom Typ AB oder ABA oder anderen Typen (A = Styrol, B = Dien) oder Mischungen der genannten Kautschuke vorgenommen wird. Weiterhin kann das Polystyrol bis zu 40 Gew.-%, vorzugsweise 5 bis 25 Gew.-% an Comonomeren, wie Acrylnitril, $\alpha$-Methylstyrol oder Methylmethacrylat enthalten.

Als Flammschutzmittel a) eignen sich halogenierte Kohlenwasserstoffe wie Chlorparaffine, insbesondere bromhaltige Kohlenwasserstoffe wie Nonabromdiphenyl oder Hexabromcyclododecan (HBCD). Besonders bevorzugt wird letzteres angewendet, in Mengen von 0,5 bis 7 Gew.-%, bezogen auf die gebrauchsfertige Formmasse.

Als Stabilisatoren b) werden verwendet insbesondere organische Phosphite, gegebenenfalls Alkanopolyole, Oligomere von Di-alkylbenzolen, z.B. Dicumyl, wie sie in (1) beschrieben sind.

Die Synergisten c) für das Flammschutzmittel sind übliche Oxide von Metallen, insbesondere ist das $Sb_2O_3$ zu erwähnen. Sie werden nur gegebenenfalls für bestimmte Ausrüstungen angewendet. Bei Anwendung von HBCD wird beispielsweise kein Synergist eingesetzt.

Bevorzugt werden von den Alkanpolyolen z.B. der Pentaerythrit und von den Phosphiten das Trisnonylphenylphosphit. Auch die in (1) beschriebenen UV-Stabilisatoren können zusammen mit den "thermischen" Stabilisatoren angewendet werden. Die Mengen für die Stabilisatoren liegen im Bereich von 0,03 bis 3 Gew.-%, bezogen auf die Formmasse.

Weiterhin können Antioxydantien d) wie sterisch gehinderte Phenole in den dem Fachmann bekannten Mengen Verwendung finden, vgl. (2).

Als Zusatzstoffe e) können verwendet werden an sich bekannte Hilfsmittel für die Verarbeitung, z.B. Gleitmittel, Entformungsmittel, ferner Pigmente, Weichmacher, Antistatika, UV-Stabilisatoren, Treibmittel, Füllstoffe oder auch Verstärkerkautschuke, sofern diese nicht zum schlagfesten Polystyrol gerechnet werden. Als weiteres Mittel f) ist nicht aufgeschmolzenes Polystyrol (Granulat) zu nennen, das insbesondere zum Abdichten des in der 2. Verfahrensstufe verwendeten Extruders angewendet wird. Dieses nicht aufgeschmolzene Polystyrol kann schlagfest modifiziert sein und kann u.a. zur Einstellung einer bestimmten Mechanik (Schlagzähigkeit etc.) des Endproduktes verwendet werden. Es kann unmittelbar vor der Vormischung oder zusammen mit dieser oder kurz danach in den Extruder eingeführt werden.

Nachstehend soll das Verfahren näher erläutert werden:
In der ersten Mischvorrichtung (1. Stufe des Verfahrens) können dem Flammschutzmittel die gesamte Menge der Stabilisatoren b) oder auch nur Teile davon zugesetzt werden. Weiterhin können in dieser Stufe die in der Rezeptur der selbstverlöschenden Formmassen benötigten anderen Mittel c), d) und e), ganz oder teilweise zugesetzt werden. Im allgemeinen werden die Stoffe mit Raumtemperatur in die Mischvorrichtung eingeführt. Durch Friktionswärme kann die Temperatur bis etwa 100°C ansteigen. Die Vorvermischung kann in diskontinuierlich oder kontinuierlich betriebenen Mischaggregaten durchgeführt werden, beispielsweise in Rührkesseln, Trommelmischern, Mischrohren, mechanischen Intensiv-Mischern, Knetern oder Extrudern. Das Gemisch der genannten Mittel hat je nach Art und Menge der Komponenten eine flüssige, pastenförmige oder auch pulverförmige oder körnige Konsistenz.

Bei einer bevorzugten Ausführungsform des erfindungsgemäßen Verfahrens werden die Flammschutzmittel a), insbesondere HBCD, und die Stabilisatoren b) unmittelbar vor der Zugabe zur Polymerschmelze gemischt und ohne längere Zwischenlagerung kontinuierlich dem Mischaggregat zugeführt, in dem sie mit der Schmelze vereinigt werden. Das Vorgemisch kann aber auch getrennt hergestellt und zwischengelagert werden.

Die Vermischung der Mischung des Flammschutzmittels und des Stabilisators mit der heißen Polymerschmelze wird in herkömmlichen Mischaggregaten, bevorzugt in mechanisch bewegten Intensiv-Mischern wie Extrudern oder Knetern durchgeführt. Als Extruder eignen sich Einwellen- und insbesondere Zweiwellenextruder.

In der bevorzugten Ausführungsform wird zur Vermischung des Vorgemisches mit der Polymerschmelze ein Zweiwellenextruder verwendet. In einer sehr bevorzugten Ausführungsform wird zusätzlich am Antriebsende des Extruders granuliertes Styrolpolymerisat aufgegeben, im allgemeinen in einer Menge von 3 bis 50 %, bevorzugt 3 bis 25 %, insbesondere 5 bis 15 %, bezogen auf die Gesamtmenge der Formmasse, und in dem daran anschließenden Teil des Extruders - also einer ersten Zone - bei einer Temperatur von vorzugsweise 160 bis 220°C aufgeschmolzen. An der gleichen Stelle oder gegebenenfalls wenige Maschinenelemente davon entfernt, werden das Flammschutzmittel und die Stabilisatoren zugegeben. In einem weiteren Abschnitt des Extruders, den weiteren Mischzonen, wird dann die heiße Polystyrolschmelze zugeführt. Die Temperatur dieser Schmelze beträgt im allgemeinen 200 bis 250°C. Weitere Stoffe, z.B. Gleitmittel wie Mineralöl, können mit der Schmelze oder in dieser oder aber auch an anderen Stellen des Extruders zudosiert werden.

Die Temperaturführung längs des Extruders wird durch Außenbeheizung bzw. -kühlung geregelt und so angepaßt, daß die Temperatur möglichst niedrig ist, ohne daß durch zu hohe Viskositäten örtlich sehr hohe Scherkräfte und damit Übertemperaturen auftreten.

Das Austragen des schmelzflüssigen Produktes aus dem Extruder erfolgt in an sich bekannter Weise, bevorzugt durch einen Düsenkopf mit einer Vielzahl von Austrittöffnungen, die in einer oder mehreren Reihen oder auch ringförmig angeordnet sind. Durch entsprechende Formgebung des Düsenkopfes ist dafür zu sorgen, daß Zonen mit erhöhter Verweilzeit des Produktes nicht vorhanden sind. Außerdem ist die Beheizung des Düsenkopfes so zu gestalten, daß auch lokal keine erhöhten Temperaturen auftreten.

Die aus dem Düsenkopf austretenden Produktfäden werden in bekannter Weise durch ein Wasserbad geführt und anschließend in einer Abschlagmaschine zu zylinderförmigen Körnern granuliert. Auch andere bekannte Granuliervorrichtungen wie Unterwasserabschlag oder Heißabschlag sind für das erfindungsgemäße Verfahren anwendbar.

Die in der vorliegenden Anmeldung beschriebenen Parameter wurden wie folgt bestimmt:

1. Die Zugfestigkeit und die Reißdehnung werden nach DIN 53 455 bestimmt.
2. Der E-Modul wird nach DIN 53 477 bestimmt.
3. Die Schlagzähigkeit wird nach DIN 53 453 bestimmt.
4. Die Vicat-Temperatur wird nach DIN 53 460 VST/B 50 bestimmt.
5. Der Schmelzindex wird nach DIN 53 735 MFI 200/5,0 bestimmt.
6. Die Flammschutzprüfung erfolgt im vertikalen Brandtest nach den Vorschriften der Underwriter Laboratories zwecks Einordnung in eine der Brandklassen UL 94 V0, V1, V2 oder 5V.
7. Die Eigenfarbe wird durch Vergleich mit handelsüblichen Produkten beurteilt.

I. Zur Durchführung der in den Beispielen beschriebenen Versuche und von Vergleichsversuchen wurden die nachfolgend beschriebenen Stoffe eingesetzt:

Als Polystyrolharze wurde die Schmelze eines Produktes eingesetzt, das durch folgende Eigenschaftsmerkmale charakterisiert werden kann:

Eigenschaften bei 23°C

Zugfestigkeit N/mm$^2$ 28

E-Modul N/mm$^2$ 2000

Reißdehnung % 40

Schlagzähigkeit kJ/m$^2$ kein Bruch

Vicattemperatur °C 90

Schmelzindex g/10 min 4

II. Als Flammschutzmittel "R" wurde Cl-Paraffin mit 70 % Cl-Anteil, als Flammschutzmittelk "S" wurde Nonabromdiphenyl und als Flammschutzmittel "T" Hexabromcyclododecan in handelsüblichen Qualitäten verwendet.

III. Als Synergist wurde Antimon-trioxid eingesetzt.

IV. Als Stabilisator "D" wurde Tris-nonyl-phenyl-phosphit eingesetzt, als Stabilisator "E" Pentaerythrit, als Stabilisator "F" Polyparadiisopropylbenzol mit einem Polymerisationsgrad von 6.

V. Als Antioxidans wurde 2,6-Di-tert.-butyl-p-kresol eingsetzt.

VI. Als Zusatzstoff "A" wurde ein handelsübliches Mineralöl, als Zusatzstoff "B" wurde ein Polystyrol mit einem Schmelzindex von 5 g/10 min und als Zusatzstoff "C" wurde als Verstärkerkautschuk ein lineares S/B/S Dreiblockcopolymerisat (®Cariflex TR 1101) eingesetzt.

Beispiele 1 bis 4 und Vergleichsversuche 5 bis 8

Alle Mengenangaben beziehen sich auf das Gewicht.

Alle beschriebenen Beispiele und Vergleichsversuche wurden mit einem Zweiwellenextruder von 30 D Schneckenlänge durchgeführt, der über mehrere Einspeiseöffnungen verfügte.

So konnten die Einsatzstoffe bei 2 D, 14 D, 20 D und/oder 24 D zugegeben werden, wobei die Zählung vom Antriebsende der Schnecke zur Austragsöffnung geht.

Ein Teil dieser Stoffe wurde in einem Mischaggregat mit Intensivmischer in diskontinuierlichen Ansätzen vorvermischt und mittels einer Dosiereinrichtung kontinuierlich in den Extruder eingespeist.

Die Beispiele, Vergleichsversuche und Ergebnisse sind nachfolgend beschrieben.

Zum Einsatz kamen folgende Stoffe:

Tabelle 1

ZUSAMMENSETZUNG DER FORMMASSE

(Gewichtsteile)

| Beispiele | 1 | 2 | 3 | 4 |
|---|---|---|---|---|
| Vorgemisch: | | | | |
| Flammschutzmittel R | 12 | - | - | - |
| Flammschutzmittel S | - | 12 | - | - |
| Flammschutzmittel T | - | - | 3,4 | 3 |
| Synergist | 6 | 4 | - | - |
| Stabilisator D | 0,6 | 0,5 | 1 | 1 |
| Stabilisator E | 0,2 | - | 0,2 | 0,2 |
| Stabilisator F | - | - | 0,2 | 0,2 |
| Zusatzstoff A | - | - | 3 | - |
| Antioxidans | 0,2 | 0,2 | 0,2 | - |
| Polystyrolschmelze | 73 | 80 | 67 | 50 |
| Zusatzstoff A | - | - | 3,0 | 0,8 |
| Zusatzstoff B | 4,0 | 3,3 | 22 | 44,6 |
| Zusatzstoff C | 4,0 | - | - | - |
| Antioxidans | | | | 0,2 |

5

| Vergleichsversuch | 5 | 6 | 7 | 8 |
|---|---|---|---|---|
| Flammschutzmittel R | 12 | - | - | - |
| Flammschutzmittel S | - | 12 | - | - |
| Flammschutzmittel T | - | - | 3,4 | 3,0 |
| Synergist | 6 | 4 | - | - |
| Stabilisator D | 0,6 | 0,5 | 1 | 1 |
| Stabilisator E | 0,2 | - | 0,2 | 0,2 |
| Stabilisator F | - | - | 0,2 | 0,2 |
| Antioxidans | 0,2 | 0,2 | 0,2 | 0,2 |
| Polystyrolschmelze | 73 | 80 | 67 | 50 |
| Zusatzstoff A | - | - | 6 | 0,8 |
| Zusatzstoff B | 4 | 3,3 | 22 | 44,6 |
| Zusatzstoff C | 4 | - | - | - |

Diese Stoffe wurden in folgende Einspeiseöffnungen des Zweiwellenextruders gegeben:

Tabelle 2

| Beispiel | 1 | 2 | 3 | 4 |
|---|---|---|---|---|
| Vorgemisch | 2 D | 2 D | 2 D | 2 D |
| Polystyrolschmelze | 14 D | 14 D | 14 D | 14 D |
| Antioxidans | - | - | - | 24 D |
| Zusatzstoff A | - | - | 20 D | 20 D |
| Zusatzstoff B | 2 D | 2 D | 2 D | 2 D |
| Zusatzstoff C | 2 D | - | - | - |

| Vergleichsversuche | 5 | 6 | 7 | 8 |
|---|---|---|---|---|
| Flammschutzmittel | 20 D | 20 D | 2 D | 24 D |
| Synergist | 20 D | 2 D | - | - |
| Stabilisator | 2 D | 2 D | 2 D | 2 D |
| Polystyrolschmelze | 14 D | 14 D | 14 D | 14 D |
| Antioxidans | 2 D | 2 D | 2 D | 24 D |
| Zusatzstoff A | - | - | 20 D | 20 D |
| Zusatzstoff B | 2 D | 2 D | 2 D | 2 D |
| Zusatzstoff C | 2 D | - | - | - |

Die Endprodukte hatten folgende Eigenschaften:

6

EP 0 212 555 B1

### Tabelle 3

| Eigenschaften bei 23°C | Produkt nach Beispiel | | | |
|---|---|---|---|---|
| | 1 | 2 | 3 | 4 |
| Zugfestigkeit N/mm² | 30 | 30 | 24 | 34 |
| E-Modul N/mm² | 1900 | 2000 | 2100 | 2700 |
| Reißdehnung % | 30 | 40 | 36 | 22 |
| Schlagzähigkeit kJ/m² | 65 | 65 | 63 | 55 |
| Vicat-Temperatur °C | 88 | 90 | 80 | 90 |
| Schmelzindex g/10 min | 9 | 6 | 22 | 13 |
| Klasse nach UL 94 | V-1 | V-0 | V-2 | V-2 |
| Eigenfarbe | normal | normal | normal | normal |

Die geforderte Brandklasse wurde erreicht, die Produkte waren hell und ließen sich ohne Schwierigkeiten zu Fertigartikeln verarbeiten.

Die Produkte der Vergleichsversuche 5, 6, 7 und 8 waren braun verfärbt und von scharzbraunen Partikeln durchsetzt, so daß aussagekräftige Produkteigenschaften nicht gemessen werden konnten. Am Produktaustritt aus den Austragsdüsen des Extruders machte sich - im Gegensatz zu den Beispielen 1 bis 4 - ein stechender Geruch von Halogenwasserstoff bemerkbar.

### Patentansprüche

1. Verfahren zur Herstellung von flammfest ausgerüstetem Polystyrol, das
   a) halogenierte Kohlenwasserstoffe als Flammschutzmittel und
   b) Stabilisatoren enthält, und das zusätzlich mindestens ein weiteres Mittel aufweist aus der Gruppe der
   c) Synergisten für das Flammschutzmittel,
   d) Antioxydantien und
   e) Zusatzstoffe,
   durch Vermischen von Polystyrol mit jeweils mindestens einem der Mittel a) bis e) in mehreren Stufen,

   dadurch gekennzeichnet, daß zunächst in einer ersten Stufe in einer Mischvorrichtung das Flammschutzmittel a) und die gesamte Menge oder Teile der Stabilisatoren b) bei Temperaturen bis zu 100°C vorvermischt werden , daß dieses Vorgemisch danach in einer zweiten Stufe in einem kontinuierlich betriebenen Ein- oder Zweiwellen-Extruder oder -Kneter üblicher Bauart so mit den anderen Mitteln vermischt wird, daß - in Förderrichtung des Extruders gesehen - zunächst das Vorgemisch und gegebenenfalls andere Mittel kontinuierlich zugeführt werden und daß danach in den weiteren Mischzonen in diesen Produktstrom unmittelbar eine weitgehend von Monomeren und Lösungsmitteln befreite Schmelze eines Polystyrolharzes, die eine Temperatur von 200 bis 250°C aufweist sowie gegebenenfalls weitere Mittel eingetragen werden und daß man ferner in an sich bekannter Weise das flammfest ausgerüstete Polystyrol aus dem Extruder austrägt und als Granulat gewinnt.

2. Verfahren zur Herstellung von flammfest ausgerüstetem Polystyrol nach Anspruch 1, das
   a) Hexabromcyclododecan als Flammschutzmittel enthält und das zusätzlich mindestens ein weiteres Mittel aufweist aus der Gruppe der
   c) Synergisten für das Flammschutzmittel,
   wobei die in der ersten Stufe erhaltene Mischung aus Flammschutzmittel a) und Stabilisatoren b) in der zweiten Stufe so mit den anderen Mitteln vermischt wird, daß - in Förderrichtung des Extruders gesehen - zunächst das Vorgemisch und granuliertes Polystyrolharz in einem Anteil von 3 bis 50 Gew.-%, bezogen auf die den Extruder verlassende Mischung, kontinuierlich zugeführt werden und in dieser ersten Zone das Aufschmelzen des Harzes im Temperaturbereich von 160 bis 220°C bewirkt wird.

7

EP 0 212 555 B1

3. Verwendung von flammfest ausgerüstetem Polystyrol, hergestellt gemäß Anspruch 1, zur Herstellung von Formteilen.

## Claims

1. A process for the preparation of flameproofed polystyrene, which
   a) contains halohydrocarbons as flameproofing agents and
   b) stabilizers and which additionally contains one or more agents from the group of
   c) synergists for the flameproofing agent,
   d) antioxidants
   and
   e) additives
   by mixing polystyrene with in each case one or more of agents a) to e) in a plurality of stages, wherein in a first stage the flameproofing agent a) and the entire amount or a proportion of the stabilizers b) are premixed at up to 100°C in a mixing apparatus, this premix is then, in a second stage, mixed with the other agents, in a continuously operated single-screw or twin-screw extruder or a kneader of conventional construction, in such a manner that, viewed in the conveying direction of the extruder, first the premix, with or without other agents, is continuously fed in and thereafter, in the further mixing zones, a melt of a polystyrene resin, which has been substantially freed from monomers and solvents and is at from 200 to 250°C, with or without other agents, is directly introduced into the above product stream, and, using methods known per se, the flameproofed polystyrene is discharged from the extruder and isolated as granules.

2. A process for the preparation of flameproofed polystyrene as claimed in claim 1, which
   a) contains hexabromocyclododecane as the flameproofing agent and which additionally contains one or more agents from the group of
   c) synergists for the flameproofing agent, the mixture, obtained in the first stage, of flameproofing agent a) and stabilizers b) being mixed in the second stage with the other agents in such a manner that, viewed in the conveying direction of the extruder, first the premix and granulated polystyrene resin in a proportion of from 3 to 50% by weight, based on the mixture leaving the extruder, are introduced continuously and, in this first zone, the resin is melted at from 160 to 220°C.

3. Use of flameproofed polystyrene, prepared as claimed in claim 1, for the production of moldings.

## Revendications

1. Procédé de préparation de polystyrène ignifugé qui contient
   a) des hydrocarbures halogénés en tant qu'agent retardant les flammes et
   b) des stabilisants et qui comporte en outre au moins un autre agent du groupe
   c) des synergistes pour l'agent retardant les flammes,
   d) des antioxydants et
   e) des additifs,
   bar mélange en plusieurs étapes de polystyrène avec, chaque fois, au moins l'un des agents a) à e), caractérisé en ce que tout d'abord, dans une première étape, l'agent retardant les flammes a) et la quantité totale ou des portions des stabilisants b) sont prémélangés à des températures allant jusqu'à 100°C dans un dispositif mélangeur, en ce que ce prémélange est ensuite mélangé, dans une deuxième étape, avec les autres agents, dans une extrudeuse ou un malaxeur à un ou à deux cylindres de type usuel fonctionnant en continu, de telle sorte qu'en considérant le sens d'entraînement de l'extrudeuse, le prémélange et éventuellement d'autres agents soient tout d'abord introduits de façon continue et qu'il soit ensuite introduit directement dans ce courant de produit, dans les zones de mélange subséquentes, une masse fondue d'une résine de polystyrène qui est débarrassée dans une large mesure de monomères et de solvants et qui présente une température de 200 à 250°C, ainsi éventuellement que d'autres agents, et en ce que, de façon connue en soi, on extrait de l'extrudeuse la polystyrène ignifugé et on le récupère sous forme de granulés.

2. Procédé de préparation de polystyrène ignifugé selon la revendication 1, qui contient
   a) de l'hexabromocyclododécane en tant qu'agent retardant les flammes
   b) des stabilisants et qui comporte en outre au moins un autre agent du groupe des

8

c) synergistes pour l'agent retardant les flammes,

le mélange d'agent retardant les flammes a) et de stabilisants b) obtenu dans la première étape étant mélangé avec les autres agents, dans la deuxième étape, de telle sorte qu'en considérant le sens d'entraînement de l'extrudeuse, le prémélange et de la résine de polystyrène granulée soient tout d'abord introduits en continu à raison de 3 à 50% en poids par rapport au mélange qui quitte l'extrudeuse, et que la fusion de la résine soit effectuée dans cette première zone dans la gamme de température de 160 à 220° C.

3. Utilisation de polystyrène ignifugé, préparé selon la revendication 1, pour la fabrication de pièces moulées.